# EUROPÄISCHE PATENTANMELDUNG

(11) **EP 0 622 166 A1**
(43) Veröffentlichungstag der Anmeldung: **02.11.1994**
(21) Anmeldenummer: 94106006.3
(22) Anmeldetag: 18.04.1994
(51) Int. Cl.: B29C 49/24, B29C 45/14, B29C 51/16, B65C 9/18

(54) **Verfahren zur Bereitstellung von einzelnen Etiketten und zur Zuführung dieser Etiketten zu Formteilen**

(30) Priorität: 30.04.1993 DE 4314346
(71) Anmelder: Zweckform Etikettiertechnik Gesellschaft mit beschränkter Haftung, D-83607 Holzkirchen (DE)
(72) Erfinder: Ast, Hans-Peter, D-83098 Brannenburg (DE)
(74) Vertreter: Fincke, Karl Theodor, Dipl.-Phys. Dr.

(57) **Zusammenfassung**

Die Erfindung betrifft ein Verfahren zur Bereitstellung von einzelnen Etiketten (4) aus einer Reihe von Etiketten und zur Zuführung der einzelnen Etiketten zu Formteilen von Formen, in denen Gegenstände - insbesondere durch Blasen, Spritzen, Gießen oder Folientiefziehen - geformt und gleichzeitig etikettiert werden, dadurch gekennzeichnet, daß ein Trägerband (2), auf dem die Etiketten (4) in Abstand voneinander in einer Reihe durch Adhäsion haften, von einem Wickel (30) dieses Trägerbands (2) zur aufeinanderfolgenden Ablösung der auf ihm befindlichen Etiketten um eine Ablösekante (18) gezogen wird und daß dann die einzelnen Etiketten (4) den ihnen zugeordneten Formteilen zugeführt werden.

## Beschreibung

Die Erfindung betrifft ein Verfahren zur Bereitstellung von einzelnen Etiketten aus einer Reihe von Etiketten und zur Zuführung der einzelnen Etiketten zu Formteilen von Formen, in denen Gegenstände - insbesondere durch Blasen, Spritzen, Gießen oder Folientiefziehen - geformt und gleichzeitig etikettiert werden. Das Formen von Gegenständen, bei dem die Gegenstände zugleich etikettiert werden, wird häufig als "in-mould-labelling" (IML) bezeichnet.

Es ist bekannt, für diese Verfahren die Etiketten im Bogen oder im Rollendruck herzustellen und dann auf Format zu schneiden, zu stapeln und vom Stapel während der Durchführung des Verfahrens abzunehmen und vereinzelt den Formteilen zuzuführen.

Die Verarbeitung solcher Etiketten vom Stapel verlangt bestimmte Etikettendicken, Etikettensteifheiten und eine zusätzliche antistatische Ausrüstung oder eine Schutzlackierung der einzelnen Etiketten, um das Verblocken der Etiketten im Stapel zu vermeiden, also eine Vereinzelung der Etiketten vor ihrer Zuführung zu den Formteilen sicherzustellen. Desweiteren ist die Formvariabilität des Umrisses der Etiketten bei einem Stanzen der Etiketten aus Bögen beschränkt. Sind die Stanzkonturen filigran, so nimmt die Schwierigkeit der Vereinzelung der Etiketten zu. Das Ausschußrisiko ist somit insgesamt ziemlich hoch.

Aus der DE 39 08 774 A1 ist es zwar bekannt, eine Etikettenbahn einer Schneidvorrichtung zuzuführen, die die Etikettenbahn in einzelne Etiketten unterteilt, jedoch können wegen der Schneidvorrichtung praktisch nur rechteckige Etiketten erzeugt werden. Überdies ist die Synchronisierung der entsprechenden Vorrichtung schwierig und ihre Störanfälligkeit daher verhältnismäßig groß.

Aufgabe der Erfindung ist es, Etiketten unterschiedlichster Ausbildung praktisch störungsfrei bei einem Verfahren eingangs genannter Art zu verarbeiten.

Zur Lösung dieser Aufgabe ist das Verfahren dadurch gekennzeichnet, daß ein Trägerband, auf dem die Etiketten in Abstand voneinander in einer Reihe durch Adhäsion haften, von einem Wickel dieses Trägerbands zur aufeinanderfolgenden Ablösung der auf ihm befindlichen Etiketten um eine Ablösekante gezogen wird und daß dann die einzelnen Etiketten den ihnen zugeordneten Formteilen zugeführt werden. Dies kann mittels einer Aufnahmefläche eines Überführungstellers erfolgen, auf der die Etiketten mit ihrer Unterfläche oder ihrer Oberfläche aufliegen.

Um das Ablösen der Etiketten von dem Trägerband zu erleichtern, ist das Verfahren bevorzugt dadurch gekennzeichnet, daß das Trägerband auf seiner den Etiketten zugewandten Seite mit einer adhäsionsvermittelnden Schicht versehen wird und/oder daß die Etiketten auf ihrer dem Trägerband zugewandten Seite mit einer adhäsionsvermittelnden Schicht versehen werden.

Um zu erreichen, daß die Etiketten sicher auf den Gegenständen haften, ist das Verfahren bevorzugt dadurch gekennzeichnet, daß die Etiketten auf ihrer dem Trägerband abgewandten Seite mit einer Schicht aus einem Material versehen werden, das bei der Formung der Gegenstände und nach der Formung gut an ihnen und den Gegenständen haftet.

Um das Verfahren präzise steuern zu können, ist es bevorzugt dadurch gekennzeichnet, daß das Trägerband transparent ist und die Etiketten auf ihrer dem Trägerband abgewandten Seite mit einem Aufdruck versehen sind.

Besonders hat sich die Verwendung einer scharfen Ablösekante bewährt und ein Umlenken des Trägerbands um die Ablösekante um 135 bis 175°. Ein einwandfreies Ablösen ist gewährleistet, wenn die Steifigkeit der Etiketten größer ist als ihre Adhäsion auf dem Trägerband.

Eine Steuerung des Ablösens der Etiketten kann durch ein schrittweises Umlenken des Trägerbands um die Ablösekante synchron zum Öffnen der Form erfolgen.

Die Etiketten können auf dem Trägerband bedruckt werden. Die Dicke der Etiketten kann minimal sein. Werden die Etiketten auf dem Trägerband ausgestanzt, so ist praktisch jeder Stanzumriß zu verwirklichen.

Die Verwendung eines transparenten Trägerbands und die Anordnung von Druckbildern auf den Etiketten auf der dem Trägerband zugewandten Seite erlaubt, daß die dem Druckbild abgewandte Seite der Etiketten typrein, also unbehandelt bleiben kann, so daß im Kontaktbereich zwischen dem Etikett und dem Gegenstand keinerlei zusätzliche Schichten oder dergleichen berücksichtigt werden müssen, die später zur Lösung der Etiketten von den Gegenständen Anlaß geben könnten.

Werden die Gegenstände aus Folien tiefgezogen, kann im Gegensatz zu geblasenen oder gespritzten Gegenständen als Haftvermittler ein lackartiger, jedoch bei erhöhter Temperatur klebrig werdender Haftvermittler auf diejenigen Seiten der Etiketten aufgebracht werden, die mit den tiefgezogenen Gegenständen in Kontakt kommen, um eine feste Verbindung der Etiketten mit den tiefgezogenen Gegenständen zu gewährleisten, da beim Tiefziehen Grenzflächentemperaturen von nur etwa 100°C auftreten können, also Temperaturen, die niedriger liegen als beim Blasen oder Spritzen.

Als Material für das Trägerband eignet sich besonders 50 bis 60 µm dickes transparentes OPP oder PET. Befindet sich das Druckbild der Etiketten auf der dem Trägerband zugewandten Seite, so ist die Abzugsgeschwindigkeit des Trägerbands und die Schrittlänge des Trägerbands beim Abzug manuell-visuell oder opto-elektronisch ohne Schwierigkeit zu steuern, und überdies sind auf diese Weise auch die Etiketten zu überprüfen, so daß verhindert wird, daß unsaubere oder fehlerhafte Etiketten den Formteilen zugeführt werden.

Ein Trägerband aus OPP kann unvorbehandelt verwendet werden, allenfalls einseitig mit einem Kaschierlack versehen werden. Ein solcher Kaschierlack wirkt als Haftvermittler zu den Etiketten, ohne eine dauerhafte Verbindung zwischen den Etiketten und dem Trägerband herbeizuführen.

Sind die Etiketten bedruckt, so kann auf die Etiketten ein Lack aufgebracht werden, der die Ablösung der Etiketten vom Trägerband erleichtert und später den Druck auf den auf den Gegenständen befindlichen Etiketten gegen mechanische Beanspruchung wie etwa Abrieb schützt und somit zu einer erhöhten Beständigkeit etwa bei Überlauf von Füllgut oder bei Dauergebrauch durch einen Konsumenten führt.

Bevorzugt ist also die bedruckte Seite der Etiketten dem Kaschierlack zugewandt. Zur guten Verankerung der Druckfarben und damit eindeutigen Fixierung des Druckbilds auf dem Etikett wird bevorzugt die zur Bedruckung ausgewählte Seite der Etiketten druckfreundlich vorbehandelt. Die dem Druck abgewandte Seite der Etiketten, die später den Gegenständen zugewandt ist, wird bevorzugt nicht vorbehandelt.

Von besonders großem Vorteil ist, daß das Trägerband zu 100 % materialrein sein kann und somit ohne Schwierigkeit wiederverwertet oder aufbereitet werden kann.

Es ist auch möglich, als Trägerband ein superkalandriertes Kraftpapier mit einer Adhäsionsschicht zu verwenden, beispielsweise einer aufextrudierten Schicht auf der Basis von unvorbehandeltem Polyolefin. Es ist dann möglich, das Druckbild der Etiketten auf der dem Trägerband abgewandten Seite des Trägerbands vorzusehen und beim Ablösen der Etiketten vom Trägerband die Ablösekante so anzuordnen, daß die unbedruckte, dem Trägerband zugewandte Seite der Etiketten so den Formteilen zugeführt wird, daß sie mit der Außenseite der Gegenstände in Kontakt kommt und thermisch fixiert wird. In diesem Fall ist bevorzugt auf der unbedruckten Seite der Etiketten ein thermoplastischer und thermisch aktivierbarer Kaschierlack aufzubringen, der einem Verfestigen der Gegenstände nach deren Formung unter Abkühlung nicht entgegensteht und eine irreversible Haftung der Etiketten auf den Gegenständen ermöglicht. Da bei dieser Version das Trägerband lichtundurchlässig ist, ist die Bedruckung der Etiketten auf der dem Trägerband abgewandten Seite Voraussetzung für eine nachträgliche qualitative Sichtkontrolle.

Es ist bekannt, daß gestapelte Etiketten nach ihrer Vereinzelung durch statische Aufladungen zu Problemen beim Einlegen in die Formen führen. Aus diesem Grund wird das Material solcher Etiketten häufig mit teuren Antistatika versehen. Diese Antistatika können eingespart werden, wenn eine elektrostatische Aufladung der Etiketten kurz nach der Ablösekante mittels wenigstens eines handelsüblichen Ionisierungsstabs abgebaut wird.

Vorrichtungen zur Durchführung des erfindungsgemäßen Verfahrens werden im folgenden unter Hinweis auf die beigefügten Zeichnungen beschrieben.
- Fig. 1: zeigt eine erste Ausführungsform einer Zuführungsvorrichtung.
- Fig. 2: zeigt zwei Formteile, von denen auf das eine ein Etikett angelegt werden kann.
- Fig. 3: zeigt im Querschnitt ein erstes Trägerband mit einem Etikett.
- Fig. 4: zeigt im Querschnitt ein zweites Trägerband mit einem Etikett.
- Fig. 5: zeigt im Querschnitt ein drittes Trägerband mit einem Etikett.
- Fig. 6: zeigt im Querschnitt ein viertes Trägerband mit einem Etikett.

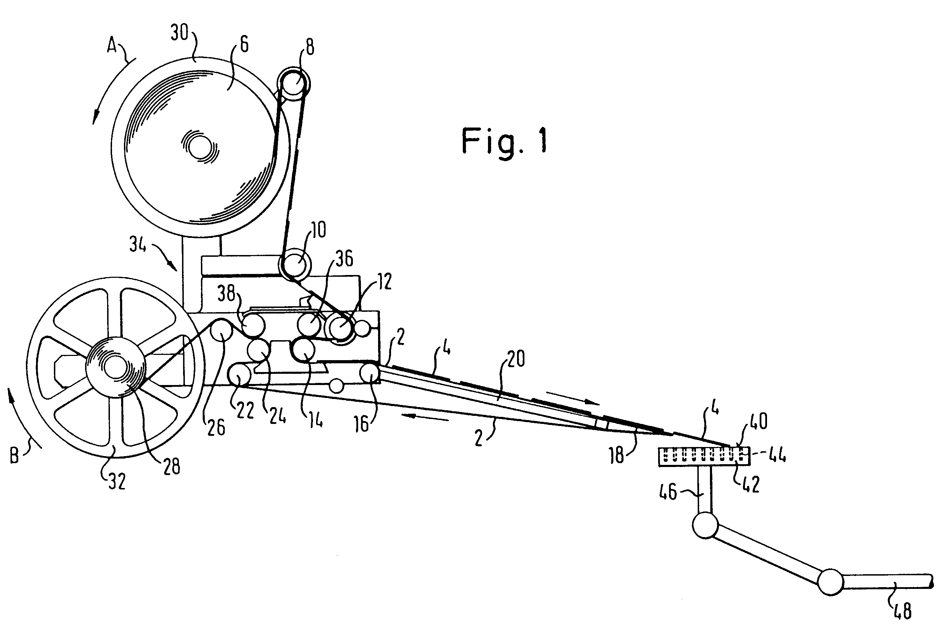

Fig. 1 zeigt einen aus einem Trägerband 2 mit aufgebrachten Etiketten 4 gebildeten Wickel 6, von dem das Trägerband über Umlenkrollen 8, 10, 12, 14, 16 über eine verhältnismäßig scharfe Ablösekante 18 am freien Ende eines Arms 20 unter Ablösung der auf ihm befindlichen, durch Adhäsion haftenden Etiketten abgezogen wird. Das von den Etiketten befreite Trägerband 2 wird nach Umlaufen von Umlenkrollen 22, 24, 26 zu einem Wickel 28 aufgewickelt. Die Wickel 6 und 28 haben als Träger Spulen 30,32 die wie die genannten Umlenkrollen an einem Gestell 34 gelagert sind und in Richtung der Pfeile A, B in Drehung versetzt werden. Mit den Umlenkrollen 14 und 24 wirken Widerlagerrollen 36, 38 zusammen. Die abgelösten Etiketten 4 werden von einer Aufnahmefläche 40 eines Überführungstellers 42 aufgenommen. In der Aufnahmefläche 40 münden Ansaugkanäle 44, die durch gesteuerte Ansaugluft die abgelösten Etiketten 4 vorübergehend auf der Aufnahmefläche 40 festhalten. Solche Überführungsteller 42 sind für sich bekannt. Der Überführungsteller 42 befindet sich am Ende eines Stiels 46, der über einen Mehrfachgelenkarm 48 bekannter Art mit einem nicht dargestellten Formträger verbunden ist und so gesteuert wird, daß die Etiketten 4 dem jeweiligen Formteil an richtiger Stelle zugeführt werden und nach Abschalten der Saugluft dort belassen werden.

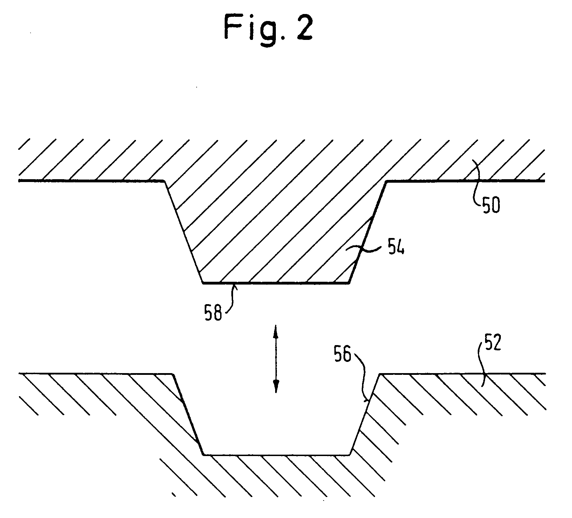

Fig. 2 zeigt zwei Formteile 50, 52, von denen das Formteil 50 eine im Schnitt trapezförmige Erhebung 54 aufweist, die beim Formen eine ihr entsprechende trapezförmige Vertiefung 56 im Formteil 52 teilweise füllt. Die Etiketten 4 nach Fig. 1 können wegen der Geometrie besonders einfach auf die plane (hier untere) Grenzfläche 58 der trapezförmigen Erhebung 54 aufgebracht werden.

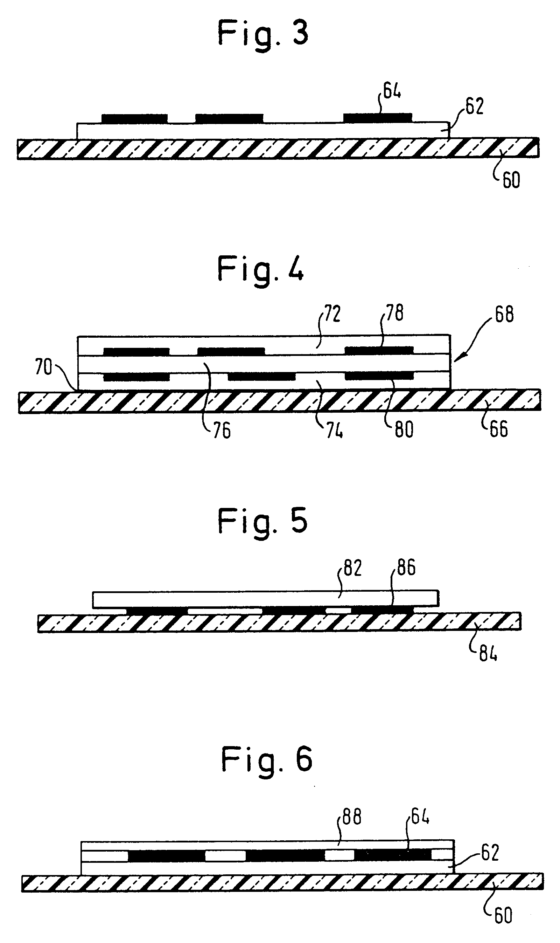

Fig. 3 zeigt einen Träger 60, auf dem sich ein Etikett 62 mit einem Aufdruck 64 befindet.

Fig. 4 zeigt einen Träger 66 mit einer das Ablösen eines Etiketts 68 erleichternden Schicht 70, auf der das Etikett 68 durch Adhäsion haftet. Das Etikett 68 weist eine obere Schicht 72 und eine untere Schicht 74 auf, die beide als Schutzschichten dienen, und eine mittlere Schicht 76, die beidseitig mit einem Aufdruck 78 bzw. 80 versehen ist.

Die auf dem Trägerband 2, 60, 66 befindlichen Etiketten 4, 62, 68 sind - gegebenenfalls mit ihren Schutzschichten 72, 74 - auf ihren Trägerbändern 2, 60, 66 ausgestanzt. Die Trägerbänder 2, 60, 66 gestatten eine sichere Führung und Ablösung auch von sehr dünnen Etiketten.

Unter Umständen ist eine gesonderte Zuführvorrichtung wie die Vorrichtung 40, 44, 46, 48 nicht erforderlich. Vielmehr können bei gegebenen Umständen die Etiketten 4 unmittelbar nach ihrer Ablösung auf ein Formteil aufgebracht werden.

Andererseits ist es nicht erforderlich, die abgelösten Etiketten 4 unmittelbar auf einen Überführungsteller 42 an einem Mehrfachgelenkarm 48 aufzubringen. Vielmehr können hierzu zwischen dem abgelösten Etikett 4 und dem Überführungsteller 42 gesonderte Überführungsglieder vorgesehen sein.

Statt des Überführungstellers 42 kann auch ein Überführungskonus gemäß EP 0 501 105 vorgesehen sein, der eine wenigstens partielle Rundumetikettierung ermöglicht.

Um die Etiketten 4 störungsfrei auf eine der Fläche 40 entsprechende Fläche aufbringen zu können, kann eine Relativbewegung zwischen der Ablösekante 18 und der Aufnahmefläche 40 vorteilhaft sein, wobei die Relativgeschwindigkeit der Spendegeschwindigkeit der Etiketten 4 angepaßt ist.

Statt einer Aufnahmefläche 40 auf einem Überführungsteller 42 mit Ansaugkanälen 44 kann auch ein entsprechend ausgebildeter Zylinder oder ein entsprechend ausgebildetes Band vorgesehen sein, was sich insbesondere bewährt hat, wenn die Etiketten 4 sehr dünn sind und eine geringe Steifigkeit aufweisen. Der jeweilige Zylinder oder das jeweilige Band kann bei geeigneter Führung und Steuerung seiner Bewegung sowie Steuerung von den Luftansaugkanälen 44 entsprechenden Kanälen die Etiketten 4 unmittelbar Formteilflächen wie der Formteilfläche 58 in Fig. 2 zuführen und dort abgeben.

Die Etiketten 4 können nach ihrer Ablösung an der Ablösekante 18 auch in einen Zuführschacht gespendet werden, von wo aus sie in die Form zur richtigen Stelle auf einem Formteil rutschen.

Befinden sich die Etiketten 4 auf einer Lackschicht des Trägerbands, die die Adhäsion der Etiketten 4 begünstigt, so kann ein solcher Lack verwendet werden, der von den Etiketten 4 bei der Ablösung mitgenommen wird, der Lack also stärker an den Etiketten 4 als am Trägerband 2 haftet, so daß das Trägerband 2 nach dem Ablösen der Etiketten 4 nicht mehr mit Lack verunreinigt ist und das Trägerband wiederverwendet werden kann.

Geeignete Verbundetiketten sind in der EP 0 450 328 beschrieben.

Damit die Etiketten 4 insbesondere bei Temperaturen unter 100°C eine gute Verbindung mit aus Kunststoff zu formenden Gegenständen eingehen, werden die Etiketten 4 auf ihren Kontaktflächen mit den Gegenständen bevorzugt mit einer - insbesondere lackartigen - thermosensitiven Schicht aus hitzeaktivierbarem Klebstoff versehen. Wenn die Kontaktfläche der Etiketten 4 zu den zu etikettierenden Gegenständen eine Oberflächenspannung von mehr als 40 mN/m aufweist, ist die Haftung der Etiketten 4 an den Gegenständen auch bei Temperaturen unter 100°C so gut, daß eine solche Schicht nicht mehr nötig ist.

Um die genannte hohe Oberflächenspannung zu erreichen, wird vorzugsweise die gesamte Oberfläche der Etiketten 4 unmittelbar vor der Ablösekante 18 mit einer Corona-Entladung vorbehandelt, bevorzugt so, wie dies in der DE-A-41 07 531 beschrieben ist.

Die Etiketten 4 können sowohl einseitig als auch beidseitig bedruckt sein, wie dies die Figuren 3 und 4 bezüglich der Etiketten 62 und 68 zeigen.

Beim und nach dem Formvorgang in der Form schrumpfen in der Regel die Gegenstände, und die auf ihnen befindlichen Etiketten 4 können dadurch eine rauhe, faltige, matte Oberfläche erhalten. Um diese unerwünschte Wirkung zu vermeiden, können zweilagige Etiketten verwendet werden, deren Lagen entsprechend dem genannten Schrumpfvorgang unterschiedlich gereckt sind.

Fig. 5 zeigt ein Trägerband 84 mit einem Etikett 82, das auf seiner dem Trägerband 84 zugewandten Seite mit einem Aufdruck 86 versehen ist.

Fig. 6 zeigt entsprechend Fig. 3 ein Trägerband 60 mit einem Etikett 62, das auf seiner dem Trägerband 60 abgewandten Seite mit einem Aufdruck 64 versehen ist. Dieser Aufdruck 64 ist jedoch mit einer aufkaschierten Folie 88 abgedeckt.

Die Etikettenfolien, die Kaschierfolien und die Trägerbänder können aus transparenten Kunststoffolien bestehen, wie PP, PET, PS, PVC, PE.

## Patentansprüche

1. Verfahren zur Bereitstellung von einzelnen Etiketten (4; 62; 68; 82) aus einer Reihe von Etiketten (4; 62; 68; 82) und zur Zuführung der einzelnen Etiketten zu Formteilen (50; 52) von Formen (50, 52), in denen Gegenstände - insbesondere durch Blasen, Spritzen, Gießen oder Folientiefziehen - geformt und gleichzeitig etikettiert werden,
**dadurch gekennzeichnet,**
daß ein Trägerband (2; 60; 66; 84), auf dem die Etiketten (4; 62; 68; 82) in Abstand voneinander in einer Reihe durch Adhäsion haften, von einem Wickel (6) dieses Trägerbands (2; 60; 66; 84) zur aufeinanderfolgenden Ablösung der auf ihm befindlichen Etiketten (4; 62; 68; 82) um eine Ablösekante (18) gezogen wird und daß dann die einzelnen Etiketten (4; 62; 68; 82) den ihnen zugeordneten Formteilen (50, 52) zugeführt werden.

2. Verfahren nach Anspruch 1, dadurch gekennzeichnet, daß das Trägerband (2; 60; 66; 84) auf seiner den Etiketten (4; 62; 68; 82) zugewandten Seite mit einer adhäsionsvermittelnden Schicht versehen wird.

3. Verfahren nach Anspruch 1 oder 2, dadurch gekennzeichnet, daß die Etiketten (4; 62; 68; 82) auf ihrer dem Trägerband (2; 60; 66; 84) zugewandten Seite mit einer adhäsionsvermittelnden Schicht versehen werden.

4. Verfahren nach einem der vorstehenden Ansprüche, dadurch gekennzeichnet, daß die Etiketten (4; 62; 68; 82) auf ihrer dem Trägerband (2; 60; 66; 84) abgewandten Seite mit einer Schicht aus einem Material versehen werden, das bei der Formung der Gegenstände und nach der Formung gut an ihnen und den Gegenständen haftet.

5. Verfahren nach einem der vorstehenden Ansprüche, dadurch gekennzeichnet, daß das Trägerband (2; 60; 66; 84) transparent ist und die Etiketten (4; 62; 68; 82) auf ihrer dem Trägerband (2; 60; 66; 84) abgewandten Seite und/oder auf ihrer dem Trägerband (2; 60; 66; 84) zugewandten Seite mit einem Aufdruck (64; 78, 80; 86) versehen sind.

6. Verfahren nach einem der vorstehenden Ansprüche, dadurch gekennzeichnet, daß die Etiketten (62) einlagig und auf ihrer dem Trägerband (60) abgewandten Seite mit einem Aufdruck (64) versehen sind.

7. Verfahren nach einem der Ansprüche 1 bis 5, dadurch gekennzeichnet, daß die Etiketten (68) dreilagig mit einer mittleren, beidseitig mit einem Aufdruck (78, 80) versehenen Schicht (76) sind.

8. Verfahren nach einem der Ansprüche 1 bis 5, dadurch gekennzeichnet, daß die Etiketten (82) einlagig und auf ihrer dem Trägerband (84) zugewandten Seite mit einem Aufdruck (86) versehen sind.

9. Verfahren nach Anspruch 6, dadurch gekennzeichnet, daß der Aufdruck (64) mit einer aufkaschierten Schutzfolie (88) abgedeckt ist.

10. Verfahren nach einem der vorstehenden Ansprüche, dadurch gekennzeichnet, daß eine elektrostatische Aufladung der Etiketten (4; 62; 68; 82) in geringem Abstand von der Ablösekante (18) mittels wenigstens eines Ionisierungsstabs abgebaut wird.
